# EUROPÄISCHE PATENTSCHRIFT

(11) **EP 1 028 874 B1**
(45) Veröffentlichungstag und Bekanntmachung des Hinweises auf die Patenterteilung: **09.05.2001**
(21) Anmeldenummer: 98955383.9
(22) Anmeldetag: 08.10.1998
(51) Int. Cl.: B60R 21/32

(54) **VERFAHREN UND ZÜNDSCHALTUNG ZUR AUSLÖSUNG EINES INSASSENSCHUTZSYSTEMS**
PROCESS AND IGNITION CIRCUIT FOR TRIGGERING A PASSENGER PROTECTION SYSTEM
METHODE ET CIRCUIT D'ALLUMAGE POUR LE DECLENCHEMENT D'UN SYSTEME DE PROTECTION DE PASSAGERS

(30) Priorität: 11.11.1997 DE 19749856
(43) Veröffentlichungstag der Anmeldung: 23.08.2000
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: DE9802980
(87) Internationale Veröffentlichungsnummer: WO9924293

(56) Entgegenhaltungen:
- US-A- 5 522 617
- US-A- 5 554 890

## Beschreibung

Die Erfindung betrifft ein Verfahren zum Zünden einer Zündpille eines Insassenschutzsystems eines Kraftfahrzeugs, gemäß dem Oberbegriff des Patentanspruchs 1. Weiterhin ist die Erfindung auf eine Zündschaltung eines Insassenschutz-systems eines Kraftfahrzeugs gemäß dem Oberbegriff des Patentanspruchs 3 gerichtet.

Da ein Insassenschutzsystem eines Kraftfahrzeugs bei einem Unfall (Crash) auch dann zuverlässig auslösen muß, wenn die Verbindung zum Bordnetz unterbrochen sein sollte, sind üblicherweise ein oder mehrere Zündkondensatoren vorgesehen, die während des normalen Kraftfahrzeugbetriebs aufgeladen werden und die zur Zündung der Zündpille(n) des Insassenschutzsystems erforderliche Energie bereitstellen. Die Zündpillen sind mit den Zündkondensatoren über einen Zündschalter verbunden, der mit einer Strombegrenzung versehen sein kann. Da während der gesamten Zünddauer eine minimale Spannung an der Zündpille zur Gewährleistung eines nicht unter einen bestimmten Mindestwert absinkenden Stroms aufrechterhalten werden muß, bleibt üblicherweise ein größerer Teil der Energie nutzlos in den Kondensatoren gespeichert. Die gespeichert bleibende Energie muß hierbei höher sein als die verbrauchte Energie. Dies bedeutet, daß relativ große Zündkondensatoren mit hohem Kapazitätswert und hohe Lade-spannung bereitgestellt werden müssen, die hohen Raumbedarf erfordern und daher ein Hindernis für einen kompakteren Aufbau der Zündschaltung darstellen. Weil die Zündpillen mit einem konstanten Strom gespeist werden müssen/sollen, wird ein Strombegrenzer eingesetzt, der einen großen Teil der Energie verbraucht.

Aus der DE 44 09 019 A1 ist eine Zündschaltung für ein Insassenschutzmittel in einem Kraftfahrzeug bekannt, bei dem zwei Zündkondensatoren ausreichend Energie bereitstellen. Dabei wird innerhalb einer ersten Zeitspanne ab Zündung lediglich der erste Zündkondensator entladen, bevor nach einer festgesetzten Zeitspanne ab Zündung lediglich der zweite Zündkondensator entladen wird.

Aus der WO 93/17893 sind ein Verfahren gemäß dem Oberbegriff des Patentanspruchs 1 sowie eine Zündschaltung gemäß dem Oberbegriff des Patentanspruchs 3 bekannt. Bei der bekannten Zündschaltung sind zwei oder mehr Zündkondensatoren vorgesehen, die während des normalen Kraftfahrzeugbetriebs parallel zueinander und zu der Kraftfahrzeugbatterie geschaltet sind, so daß sie jeweils auf die Bordnetzspannung aufgeladen werden. Ziel dieser Druckschrift ist es, die Zündpille bei einem Unfall sofort mit einer deutlich oberhalb der Bordnetzspannung liegenden Spannung zu speisen, so daß der Auslösevorgang sicher beginnen kann. Hierzu werden die Zündkondensatoren bei Erfassung eines Unfalls sofort in Reihe geschaltet und der Zündschalter geschlossen, so daß die Zündpille mit einer Spannung gespeist wird, die doppelt so groß wie die Bordnetzspannung oder bei Verwendung mehrerer Kondensatoren sogar noch höher ist.

Die Erfindung liegt die Aufgabe zugrunde, ein Verfahren zum Zünden einer Zündpille eines Insassenschutzsystems zu schaffen, das eine zuverlässige Zündung der Zündpille unter Verwendung von kleineren Zündkondensatoren ermöglicht.

Diese Aufgabe wird mit den in Patentanspruch 1 genannten Merkmalen gelöst.

Weiterhin wird mit der Erfindung eine Zündschaltung gemäß dem Patentanspruch 5 geschaffen, die sich gleichfalls durch die Verwendbarkeit kleinerer Zündkondensatoren auszeichnet, ohne daß die Sicherheit der korrekten Auslösung des Insassenschutzsystems beeinträchtigt ist.

Vorteilhafte Ausgestaltungen der Erfindung sind in den Unteransprüchen angegeben.

Bei der Erfindung wird somit ein Zündvorgang unter Verwendung parallel geschalteter Zündkondensatoren begonnen, wonach die Zündkondensatoren dann aber während des noch andauernden Zündimpulses von Parallelschaltung auf Reihenschaltung umgeschaltet werden. Diese Vorgehensweise bringt die folgenden Vorteile. Zu Beginn des Zündvorgangs wird die Zündpille lediglich mit der einfachen Ladespannung der Zündkondensatoren gespeist, so daß ein Zündstrom fließt, der den zur Aktivierung der Zündpille ausreichenden Wert besitzt, aber nicht höher ist als der Strombegrenzungswert. Hierdurch kann ein durch die Strombegrenzung hervorgerufener Energieverlust vermieden werden. Ein solcher Energieverlust könnte andernfalls dann auftreten, wenn anfänglich mit einer deutlich höheren, durch anfängliche Reihenschaltung der Zündkondensatoren geschaffenen Erregungsspannung begonnen würde. Während des Zündvorgangs verringert sich jedoch die in den Zündkondensatoren gespeicherte Ladung, so daß der Stromfluß dann unter den minimal benötigten Wert absinken könnte. Dieser Tendenz wird erfindungsgemäß dadurch entgegengewirkt, daß während der Dauer des Zündimpulses die Zündkondensatoren von Parallelschaltung auf Reihenschaltung umgeschaltet werden, wobei die dann resultierende Summenspannung nun (mindestens) doppelt so hoch ist wie die Einzelspannung der bislang parallel geschalteten Zündkondensatoren. Diese Summenspannung ist ausreichend, den Stromfluß für eine längere Zeitdauer bei oder oberhalb des Stromminimalwerts aufrecht zu erhalten, ohne daß der Strom in die Strombegrenzung gerät. Bei der Erfindung kann somit ein für niedrige Verlustleistung ausgelegter Strombegrenzer eingesetzt werden.

Diese Umschaltung von Parallelschaltung auf Reihenschaltung erfolgt vorzugsweise dann, wenn sich die Spannungen an den Zündkondensatoren etwa halbiert haben, d. h. nach etwa der Hälfte der Zündzeit bzw. in der Mitte des Zündimpulses. Die Umschaltung kann aber auch früher oder später erfolgen, vorzugsweise zwischen 30 % und 70 % der Dauer des Zündimpulses. Die Umschaltung kann nach Ablauf eines bestimmten Zeitintervalls ab dem Beginn des Zündimpulses erfolgen. Alternativ kann auch eine Messung der Spannung und/oder des Stroms des Zündimpulses vorgesehen sein und die Umschaltung bei Absinken der Spannung und/oder des Stroms auf oder unter einen vorgegebenen Grenzwert erfolgen. Insbesondere kann auch eine Messung der Zündkondensatorspannung vorgesehen sein und die Umschaltung bei Absinken dieser Spannung auf oder unter einen vorgegebenen Grenzwert erfolgen.

Nach der Umschaltung auf Reihenschaltung kann der Strom durch die Zündpille solange weiterfließen, bis sich die Spannungen an den Zündkondensatoren wieder halbiert haben. In den Zündkondensatoren verbleibt auf Grund dieser Ausgestaltung etwa nur noch ein Viertel der ursprünglichen Energie. Hieraus folgt, daß die Gesamtkapazität der Zündkondensatoren, verglichen mit einer Vorgehensweise ohne Reihenschaltung, um etwa 25 % verringert werden kann, so daß kompaktere Zündkondensatoren einsetzbar sind und demgemäß die Abmessungen der Zündschaltung verringerbar sind. Auch die Größe der Chipfläche des ggf. eingesetzten Strombegrenzers kann verringert werden.

Es können auch mehr als zwei Zündkondensatoren eingesetzt werden, die zu Beginn eines Zündimpulses zunächst parallel geschaltet bleiben und anschließend entweder sämtlich in Reihe geschaltet werden oder aber lediglich teilweise in Reihe geschaltet werden und teilweise in Parallelschaltung bleiben.

Die Erfindung wird nachstehend anhand eines Ausführungsbeispiels unter Bezugnahme auf die Zeichnungen näher beschrieben.
- Fig. 1: zeigt ein Ausführungsbeispiel der erfindungsgemäßen Zündschaltung;
- Fig. 2: zeigt eine zeitliche Darstellung des Spannungs- und Stromverlaufs bei einem Zündvorgang.

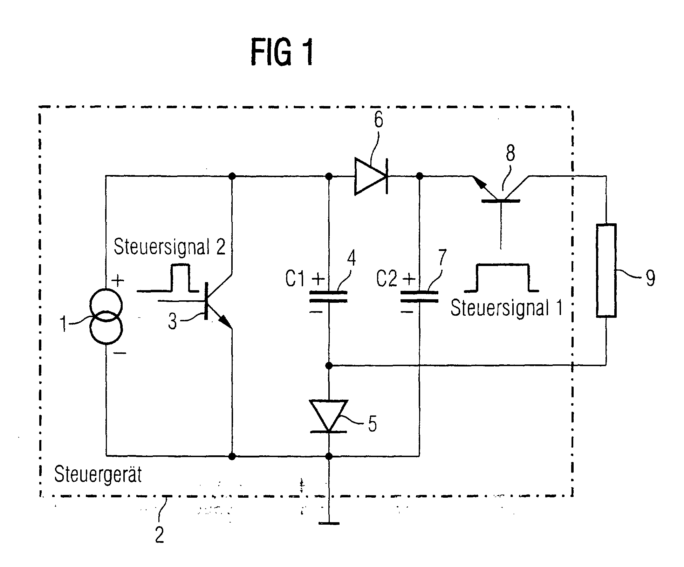

Bei dem in Fig. 1 gezeigten Ausführungsbeispiel der erfindungsgemäßen Zündschaltung ist ein Stromgenerator 1 vorgesehen, der durch die Bordbatterie des Kraftfahrzeugs oder durch eine Stromgeneratorschaltung, die durch die Bordbatterie gespeist wird und einen Bestandteil eines Steuergeräts 2 des nicht dargestellten Insassenschutzsystems darstellt, gebildet sein kann. Das Steuergerät 2 ist in Fig. 1 mit einer punktierten Umrißlinie veranschaulicht, wobei die weiteren Komponenten des Steuergeräts, wie etwa ein die Unfallsensorsignale auswendender Mikroprozessor, nicht gezeigt sind. Das Insassenschutzsystem kann beispielsweise ein Airbagsystem, ein Gurtstraffersystem oder eine sonstige Sicherheitseinrichtung sein, die durch eine oder mehrere, beispielsweise einen Gasgenerator aktivierende Zündpillen ausgelöst wird.

Die Zündschaltung enthält weiterhin einen Umschalter 3, der z. B. durch einen Schalttransistor gebildet ist, durch ein von dem Steuergerät 2 aktiviertes Treibersignal "Steuersignal2" aktiviert wird und mit seinen Hauptkontakten parallel zu dem Stromgenerator 1 geschaltet ist. Ein Zündkondensator 4, der z. B. als Elektrolytkondensator ausgebildet ist, ist mit einem Anschluß mit dem positiven Anschluß des Stromgenerators 1 und mit dem anderen Anschluß mit einer Anode einer Gleichrichterdiode 5 verbunden, deren Kathode mit dem auf Massepotential liegenden, anderen Anschluß des Stromgenerators 1 verbunden ist. Mit der positiven Elektrode des ersten Zündkondensators 4 ist weiterhin die Anode einer Gleichrichterdiode 6 verbunden, deren Kathode an die Plus-Elektrode eines zweiten Zündkondensators 7 sowie an einen Hauptkontakt eines Zündschalters 8 angeschlossen ist. Die andere Elektrode (Minus-Belag) des Zündkondensators 7, der gleichfalls als Elektrolytkondensator ausgebildet sein kann, ist mit der Kathode der Gleichrichterdiode 5 und damit mit Massepotential verbunden. Der andere Hauptkontakt des Zündschalters 8 ist an eine Zündpille 9 angeschlossen. Die Zündpille 9 ist mit ihrem anderen Anschluß mit der Anode der Gleichrichterdiode 5 und damit zugleich auch mit der Minus-Elektrode des Zündkondensators 4 verbunden.

Der Zündschalter 8 ist vorzugsweise als Schalttransistor ausgebildet, dessen Basis durch ein Treibersignal "Steuersignal1" gesteuert wird, das von dem Steuergerät 2 bei Erfassung eines Unfalls (z. B. Crash) erzeugt wird. Der Zündschalter 8 ist vorzugsweise mit einer Strombegrenzung zur Begrenzung des durch die Zündpille 9 fließenden Stroms versehen. Diese Strombegrenzung kann z. B. dadurch realisiert sein, daß die Amplitude des Steuersignalsl und damit die Basisspannung des Zündschalters 8 an dem einen Ende eines nicht gezeigten Widerstands abgegriffen wird, der in Reihe zwischen den Zündschalter 8 und die Zündpille 9 geschaltet und mit seinem anderen Anschluß an den Ausgang des Zündschalters 8 angeschlossen ist. Hierdurch ergibt sich in Verbindung mit dem elektrischen Widerstand der Zündpille 9 ein Widerstands-Spannungsteiler, so daß die an diesem Spannungsteiler abgegriffene Basisspannung eine Strombegrenzung bewirkt. Die Strombegrenzung ist so gewählt, daß der minimal erforderliche, jedoch kein höherer Strom durch die Zündpille 9 fließt.

Damit läßt sich eine effektive Energieausnutzung der gespeicherten Zündkondensatorladung erzielen.

Wenn die Notwendigkeit einer Auslösung des Insassenschutzsystems des Kraftfahrzeugs durch entsprechende Sensoren, z. B. Crash-Sensoren, erfaßt wird, erzeugt das Steuergerät 2 das Steuersignal1 mit dem beim Zündschalter 8 angegebenen Verlauf, so daß der Zündschalter 8 durchgeschaltet und die Zündpille 9 aktiviert wird. Die Zündkondensatoren 4 und 7, die bereits zuvor durch den Stromgenerator 1 auf die vorgesehene Ladespannung aufgeladen wurden, sind hierbei anfänglich noch parallel geschaltet und geben daher die in ihnen gespeicherte Ladung gleichzeitig und parallel an die Zündpille 9 ab. Hierdurch sinkt die Zündkondensatorspannung aufgrund des konstanten, durch die Zündpille 9 fließenden Stroms linear ab. Nach etwa der Hälfte der Zündzeit, d. h. der Dauer des Steuersignals1, hat sich die Spannung an den Zündkondensatoren 4 und 7 etwa halbiert. Das Steuergerät 2 erzeugt dann das Treibersignal "Steuersignal2" für den Umschalter 3, dessen Verlauf an der Basis des Umschalters 3 angegeben ist. Wie ein Vergleich zwischen den Kurvenverläufen der Treibersignale "Steuersignal1" und "Steuersignal2" veranschaulicht, setzt die Anstiegsflanke des Steuersignals2 deutlich später ein als diejenige des Steuersignals1. Durch das Schließen des Umschalters 3 werden die bislang parallel geschalteten Zündkondensatoren 4 und 7 nun in Reihe geschaltet. Hierdurch erhöht sich die an der Zündpille 9 wirkende Gesamtspannung, so daß die zur Aufrechterhaltung des konstanten, durch die Zündpille 9 fließenden Stroms erforderliche Spannung bereitgestellt wird, ohne daß Energieverluste aufgrund zu hoher Spannung auftreten. Es fließt nun weiter Strom durch die Zündpille 9, bis sich die Spannungen an den Zündkondensatoren 4 und 7 wieder etwa halbiert haben. Die gesamte Energieentnahme aus den Zündkondensatoren ist somit deutlich höher als bei Beibehaltung der Parallelschaltung der Zündkondensatoren. Es können somit kleinere Zündkondensatoren mit einer Kapazität von beispielsweise 470 mF benutzt werden, die sich durch verkleinerte Abmessungen, verglichen beispielsweise mit 1.000 mF-Kondensatoren, auszeichnen.

Bei dem vorstehend beschriebenen Ausführungsbeispiel wird das Steuersignal2 so erzeugt, daß es ungefähr bei der Hälfte des Steuersignals1 einsetzt und im wesentlichen gleichzeitig wie dieses beendet wird. Die Anstiegsflanke des Steuersignals2 kann jedoch auch vor oder nach der Hälfte der Dauer des Steuersignals1 liegen, z. B. bei 30 % bis 70 % der Dauer des Steuersignals1, bezogen auf die Anstiegsflanke dieses Steuersignals1.

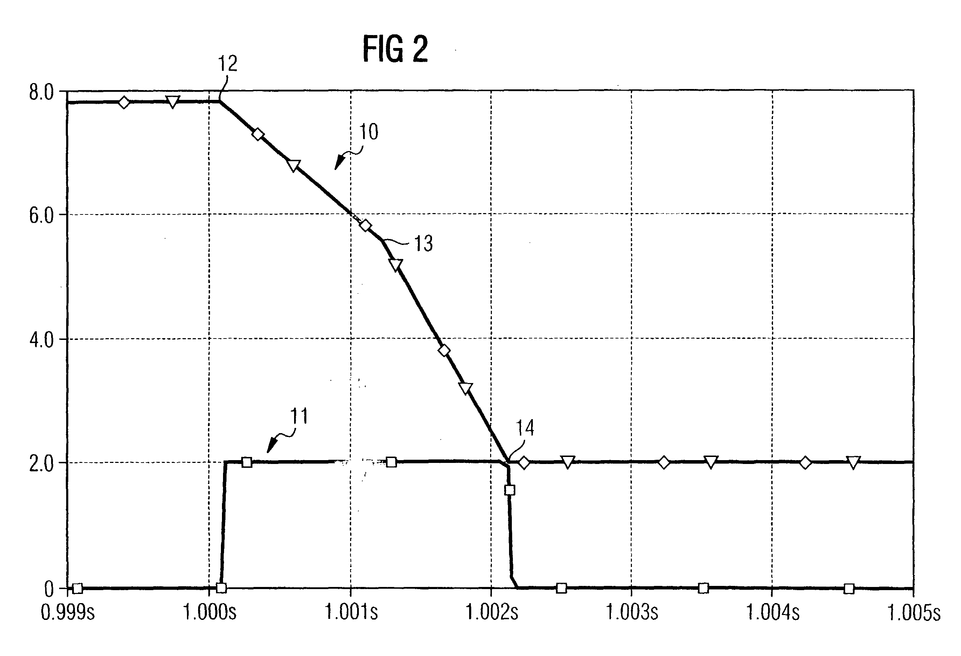

In Fig. 2 ist der Verlauf der Kondensatorspannungen und des Zündpillesstroms dargestellt, wobei auf der Abszisse die Zeit (in Sekunden) und auf der Ordinate die Spannung bzw. die Stromstärke aufgetragen ist. Der Kurvenzug 10 veranschaulicht die jeweilige Spannung an dem Zündkondensator 4 bzw. dem Zündkondensator 7, während der Kurvenzug 11 den durch die Zündpille 9 fließenden Strom repräsentiert. Der zeitliche Verlauf des Stroms 11 entspricht zugleich auch dem des Steuersignals1, d. h. der Beginn und das Ende des Stroms 11 markieren den Beginn und das Ende des Steuersignalsl (Zündimpuls).

Vor Beginn der Auslösung des Insassenschutzsystems sind die Zündkondensatoren 4 und 7 auf konstantes Potential aufgeladen. Zu einem Zeitpunkt 12 beginnt ein Zündimpuls, so daß der durch die Zündpille 9 fließende Strom auf seinen konstanten Wert springt und die Spannung der Zündkondensatoren 4 und 7 linear abnimmt. Zu einem Zeitpunkt 13 wird der Umschalter 3 umgeschaltet, so daß die Zündkondensatoren 4 und 7 nun von bisheriger Parallelschaltung auf Reihenschaltung umgeschaltet werden. Dies gewährleistet, daß der durch die Zündpille 9 fließende Strom 11 trotz der verringerten Einzelspannung der Zündkondensatoren 4 und 7 weiterhin etwa konstant aufrecht erhalten werden kann, wobei sich nun aber die Einzelspannung der Zündkondensatoren 4 und 7 aufgrund der erhöhten Summenspannung schneller linear verringert. Zu einem Zeitpunkt 14 wird der Zündimpuls abgeschaltet, so daß der Strom 11 auf Null absinkt und die Spannung der Zündkondensatoren 4 und 7 nun aufgrund fehlender Stomentnahme konstant bleibt. Aus Fig. 2 ist ersichtlich, daß die an den Zündkondensatoren 4 und 7 nach dem Zündvorgang noch vorhandene Spannung nur noch ca. ein Viertel des ursprünglichen Potentialwerts beträgt und demgemäß eine effektive Energieentnahme aus den Zündkon-densatoren 4 und 7 erzielt ist.

Die Gleichrichterdioden 5 und 6 verhindern einen gegenseitigen Ladungsausgleich zwischen den Zündkondensatoren 4 und 7, so daß die Kondensatorladung ausschließlich über die Zündpille 9 abgebaut werden kann.

Die Zündschaltung kann auch einen nicht gezeigten Spannungsmesser und/oder Strommesser zur Messung der Spannung und/oder des Stroms des Zündimpulses enthalten. Der gemessene Wert wird dann mit einem vorgegebenen Minimal-Grenzwert verglichen und der Umschalter 3 bei Erreichen dieses Minimal-Grenzwerts auf Zündkondensator-Reihenschaltung umgeschaltet.

## Patentansprüche

1. Verfahren zum Zünden einer Zündpille (9) eines Insassenschutzsystems, dessen Zündschaltung einen mit der Zündpille (9) in Reihe geschalteten, durch einen Zündimpuls schließbaren Zündschalter (8) und mindestens zwei, vor einem Zündvorgang parallel zueinander geschaltete, von einer Spannungs-oder Stromquelle (1) aufladbare Zündkondensatoren (4, 7) enthält, die ihre gespeicherte Ladung bei einem Zündimpuls gleichzeitig in die Zündpille (9) entladen,
**dadurch gekennzeichnet,**
daß die Zündkondensatoren (4, 7) zu Beginn des Zündimpulses parallel geschaltet bleiben und erst zeitversetzt nach dem Beginn des Zündimpulses in Reihe geschaltet werden.

2. Verfahren nach Anspruch 1, dadurch **gekennzeichnet,** daß die Zündkondensatoren nach Ablauf eines bestimmten Zeitintervalls ab dem Beginn des Zündimpulses in Reihe geschaltet werden.

3. Verfahren nach Anspruch 1 oder 2, dadurch **gekennzeichnet,** daß die Zündkondensatoren (4, 7) nach Ablauf von 30 % bis 70 % der Dauer des Zündimpulses in Reihe geschaltet werden.

4. Verfahren nach Anspruch 1, dadurch **gekennzeichnet**, daß die Spannung und/oder der Strom des Zündimpulses gemessen werden und die Zündkondensatoren dann in Reihe geschaltet werden, wenn der gemessene Spannungs- und/oder Stromwert auf einen bestimmten Wert absinkt.

5. Zündschaltung eines Insassenschutzsystems eines Kraftfahrzeugs, mit einer Zündpille (9), einem mit der Zündpille (9) in Reihe geschalteten, durch einen Zündimpuls schließbaren Zündschalter (8), mindestens zwei Zündkondensatoren (4, 7), die durch eine Spannungs- oder Stromquelle (1) aufladbar sind, einer Steuerschaltung (2) zur Erzeugung des Zündimpulses, und einem Umschalter (3) zum Umschalten der Zündkondensatoren (4, 7) zwischen Parallelschaltung und Reihenschaltung,
**dadurch gekennzeichnet**,
daß die Steuerschaltung (2) bei einem eine Auslösung der Zündschaltung erfordernden Ereignis zunächst den Zündimpuls zum gleichzeitigen Entladen der Zündkondensatoren (4,7) erzeugt und erst zeitversetzt einen Umschaltimpuls an den Umschalter (3) zur Umschaltung der Zündkondensatoren (4, 7) von Parallelschaltung auf Reihenschaltung anlegt.

6. Zündschaltung nach Anspruch 5, dadurch **gekennzeichnet,** daß der Zündschalter (8) eine Strombegrenzungsfunktion enthält.

7. Zündschaltung nach Anspruch 5 oder 6, dadurch **gekennzeichnet,** daß einer der Zündkondensatoren (4) mit einer Diode (5) in Reihe geschaltet ist und der Umschalter (3) parallel zu dieser Reihenschaltung geschaltet ist.

8. Zündschaltung nach Anspruch 7, dadurch **gekennzeichnet,** daß der andere Zündkondensator (7) mit seinem einen Anschluß unter Zwischenschaltung einer Diode (6) mit dem einen Anschluß des Umschalters (3) und mit seinem anderen Anschluß direkt mit dem anderen Anschluß des Umschalters (3) verbunden ist.

9. Zündschaltung nach einem der Ansprüche 5 bis 8, dadurch **gekennzeichnet,** daß die Zündkondensatoren (4, 7) nach Ablauf eines bestimmten Zeitintervalls ab dem Beginn des Zündimpulses in Reihe geschaltet werden.

10. Zündschaltung nach Anspruch 9, dadurch **gekennzeichnet,** daß das bestimmte Zeitintervall 30 % bis 70 % der Dauer des Zündimpulses beträgt.

11. Zündschaltung nach einem der Ansprüche 5 bis 10, dadurch **gekennzeichnet**, daß eine Meßeinrichtung zur Messung der Spannung und/oder des Stroms des Zündimpulses vorhanden ist, und daß die Steuerschaltung den Umschalter (3) auf Reihenschaltung umschaltet, wenn die Spannung und/oder der Strom auf einen bestimmten Wert abgesunken ist.

## Claims

1. Method for firing a firing cap (9) of a vehicle occupant protection system whose firing circuit contains a firing switch (8) which is connected in series with the firing cap (9) and can be closed by means of a firing pulse, and at least two firing capacitors (4, 7) which are connected in parallel with one another before a firing process, can be charged by a voltage source or current source (1) and discharge their stored charge simultaneously into the firing cap (9) when there is a firing pulse, characterized in that the firing capacitors (4, 7) remain connected in parallel at the start of the firing pulse and are only connected in series after a time delay after the start of the firing pulse.

2. Method according to Claim 1, characterized in that the firing capacitors are connected in series after the expiry of a specific time interval from the start of the firing pulse.

3. Method according to Claim 1 or 2, characterized in that the firing capacitors (4, 7) are connected in series after the expiry of 30% to 70% of the duration of the firing pulse.

4. Method according to Claim 1, characterized in that the voltage and/or the current of the firing pulse are measured and the firing capacitors are connected in series if the measured voltage value and/or current value drops to a specific value.

5. Firing circuit of a vehicle occupant protection system of a motor vehicle, having a firing cap (9), a firing switch (8) which is connected in series with the firing cap (9) and can be closed by means of a firing pulse, at least two firing capacitors (4, 7), which can be charged by a voltage source or current source (1), a control circuit (2) for generating the firing pulse and a changeover switch (3) for switching over the firing capacitors (4, 7) between parallel connection and series connection, characterized in that when there is an event which requires triggering of the firing circuit the control circuit (2) initially generates the firing pulse for simultaneously discharging the firing capacitors (4, 7) and only applies after a time delay a switch-over pulse to the changeover switch (3) to switch over the firing capacitors (4, 7) from parallel connection to series connection.

6. Firing circuit according to Claim 5, characterized in that the firing switch (8) contains a current limiting function.

7. Firing circuit according to Claim 5 or 6, characterized in that one of the firing capacitors (4) is connected in series with a diode (5), and the changeover switch (3) is connected in parallel with this series connection.

8. Firing circuit according to Claim 7, characterized in that the other firing capacitor (7) is connected with one of its terminals, with the intermediate connection of a diode (6), to one of the terminals of the changeover switch (3), and with its other terminal directly to the other terminal of the changeover switch (3).

9. Firing circuit according to one of Claims 5 to 8, characterized in that the firing capacitors (4, 7) are connected in series after expiry of a specific time interval from the start of the firing pulse.

10. Firing circuit according to Claim 9, characterized in that the specific time interval is 30% to 70% of the duration of the firing pulse.

11. Firing circuit according to one of Claims 5 to 10, characterized in that a measuring device is provided for measuring the voltage and/or the current of the firing pulse, and in that the control circuit switches over the changeover switch (3) to a series connection if the voltage and/or the current has dropped to a specific value.

## Revendications

1. Procédé d'allumage d'une pastille (9) d'allumage d'un système de protection de passagers, dont le circuit d'allumage comporte un interrupteur (8) d'allumage monté en série avec la pastille d'allumage et pouvant être fermé par une impulsion d'allumage et au moins deux condensateurs (4, 7) d'allumage, qui sont montés en parallèle entre eux avant un processus d'allumage, qui peuvent être chargés par une source (1) de tension ou de courant et qui se déchargent de leur charge emmagasinée lors d'une impulsion d'allumage simultanément dans la pastille (9) d'allumage,
caractérisé
en ce que les condensateurs (4, 7) d'allumage restent montés en parallèle au début de l'impulsion d'allumage et seulement d'une manière décalée dans le temps sont branchés en série après le début de l'impulsion d'allumage.

2. Procédé suivant la revendication 1, caractérisé en ce que les condensateurs d'allumage sont branchés après qu'un intervalle de temps déterminé se soit écoulé depuis le début de l'impulsion d'allumage en série.

3. Procédé suivant la revendication 1 ou 2, caractérisé en ce que les condensateurs (4, 7) d'allumage sont branchés après que de 30% à 70% de la durée de l'impulsion d'allumage s'est déroulée, en série.

4. Procédé suivant la revendication 1, caractérisé en ce que la tension et/ou le courant de l'impulsion d'allumage est mesuré et les condensateurs d'allumage sont ensuite branchés en série si la tension et/ou le courant mesuré s'abaisse à une valeur déterminée.

5. Circuit d'allumage d'un système de protection de passagers d'un véhicule automobile, comprenant une pastille (9) d'allumage, un interrupteur (8) d'allumage monté en série avec la pastille (9) d'allumage et pouvant être fermé par une impulsion d'allumage, au moins deux condensateurs (4, 7) d'allumage qui peuvent être chargés par une source (1) de tension ou de courant, un circuit (2) de commande de production de l'impulsion d'allumage et un inverseur (3) pour faire passer les condensateurs (4, 7) d'allumage entre un montage en parallèle et un montage en série,
caractérisé
en ce que le circuit (2) de commande produit, lors d'un évènement exigeant un déclenchement du circuit d'allumage, d'abord l'impulsion d'allumage pour le déchargement simultané des condensateurs (4, 7) d'allumage et seulement d'une manière décalée dans le temps une impulsion d'inversion sur l'inverseur pour faire passer les condensateurs (4, 7) d'allumage du montage en parallèle au montage en série.

6. Circuit d'allumage suivant la revendication 5, caractérisé en ce que l'interrupteur (8) d'allumage comporte une fonction de limitation du courant.

7. Circuit d'allumage suivant la revendication 5 ou 6, caractérisé en ce que l'un des condensateurs (4, 7) d'allumage est monté en série avec une diode (5) et l'inverseur (3) est monté en parallèle à ce circuit série.

8. Circuit d'allumage suivant la revendication 7, caractérisé en ce que l'autre condensateur (7) d'allumage est relié par l'une de ses bornes avec interposition d'une diode (6) à l'une des bornes de l'inverseur (3) et par son autre borne directement à l'autre borne de l'inverseur (3).

9. Circuit d'allumage suivant l'une des revendications 5 à 8,
caractérisé en ce que les condensateurs (4, 7) d'allumage sont branchés, après qu'un intervalle de temps déterminé s'est écoulé depuis le début de l'impulsion d'allumage, en série.

10. Circuit d'allumage suivant la revendication 9, caractérisé en ce que l'intervalle de temps déterminé représente de 30% à 70% de la durée de l'impulsion d'allumage.

11. Circuit d'allumage suivant l'une des revendications 5 à 10, caractérisé en ce qu'un dispositif de mesure de la tension et/ou du courant de l'impulsion d'allumage est présent et en ce que le circuit de commande inverse l'inverseur (3) pour le faire passer en un montage série si la tension et/ou le courant s'abaisse à une valeur déterminée.
